(19) Europäisches Patentamt
European Patent Office
Office européen des brevets

(11) **EP 3 974 260 A1**

(12) **DEMANDE DE BREVET EUROPEEN**

(43) Date de publication:
**30.03.2022 Bulletin 2022/13**

(21) Numéro de dépôt: **21199398.5**

(22) Date de dépôt: **28.09.2021**

(51) Classification Internationale des Brevets (IPC):
*B60R 13/08* (2006.01)   *B29C 51/10* (2006.01)
*B29C 51/12* (2006.01)   *B29C 51/14* (2006.01)
*B29C 44/12* (2006.01)   *B29C 44/14* (2006.01)
*B32B 5/02* (2006.01)   *B32B 5/24* (2006.01)

(52) Classification Coopérative des Brevets (CPC):
**B29C 51/12; B29C 44/1209; B29C 44/145;**
**B32B 5/022; B32B 5/245; B60R 13/0815;**
B29C 51/10; B29C 2791/006; B29K 2075/00;
B29K 2105/04; B29K 2995/0002; B29K 2995/0015;
B29L 2031/3005; B32B 2262/0246;
B32B 2262/0261;                                     (Cont.)

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**
Etats d'extension désignés:
**BA ME**
Etats de validation désignés:
**KH MA MD TN**

(30) Priorité: **28.09.2020   FR 2009842**

(71) Demandeur: **Faurecia Automotive Industrie**
**92000 Nanterre (FR)**

(72) Inventeurs:
• **VUS, Christophe**
**08160 Flize (FR)**
• **LANGINY, Michel**
**08160 Vendresse (FR)**

(74) Mandataire: **Lavoix**
**2, place d'Estienne d'Orves**
**75441 Paris Cedex 09 (FR)**

(54) **PIÈCE D'INSONORISATION DE VÉHICULE AUTOMOBILE ET PROCÉDÉ DE FABRICATION ASSOCIÉ**

(57)     La pièce (12) comprend :
-une couche de masse lourde (14) ;
- un insert (16) appliqué sur une première région d'une première face (20) de la couche de masse lourde (14) ;

- une couche de mousse (18) appliquée sur une deuxième région de la première face (20) de la couche de masse lourde (14).
L'insert (16) est formé d'un matériau fibreux.

FIG.1

EP 3 974 260 A1

(52) Classification Coopérative des Brevets (CPC):
(Cont.)
B32B 2262/0276; B32B 2262/065;
B32B 2262/101; B32B 2307/102; B32B 2605/00

## Description

La présente invention concerne une pièce d'insonorisation de véhicule automobile, comprenant :

- une couche de masse lourde ;
- un insert appliqué sur une première région d'une première face de la couche de masse lourde ;
- une couche de mousse appliquée sur une deuxième région de la première face de la couche de masse lourde.

La pièce d'insonorisation ainsi décrite est notamment un composant d'insonorisation destiné à être placé entre l'habitacle du véhicule et le compartiment moteur. En particulier, la pièce est un tablier destiné à être traversé par une colonne de direction du véhicule automobile.

La pièce d'insonorisation est destinée à résoudre les problèmes acoustiques se posant dans un espace clos, tel que l'habitacle du véhicule automobile, à proximité de sources de bruits telles qu'un moteur ou les différentes pièces mécaniques situées derrière le tableau de bord, mais également des problèmes structurels, en renforçant des zones d'intérêt.

Généralement, dans le domaine des basses fréquences, les ondes acoustiques engendrées par les sources de bruits précitées sont amorties par des matériaux sous forme de feuilles simples ou doubles, ayant un comportement viscoélastique, ou par atténuation acoustique d'un système masse-ressort poreux et élastique.

Un composant d'insonorisation assure une « isolation » au sens de la présente invention, lorsqu'il empêche l'entrée d'ondes acoustiques à moyennes et hautes fréquences dans l'espace insonorisé, essentiellement par réflexion des ondes vers les sources de bruits ou l'extérieur de l'espace insonorisé.

Un composant d'insonorisation fonctionne par « absorption acoustique » (dans le domaine des moyennes et hautes fréquences), lorsque l'énergie des ondes acoustiques se dissipe dans un matériau absorbant.

Un composant d'insonorisation performant doit fonctionner à la fois en assurant une bonne isolation et une bonne absorption. Pour caractériser la performance d'un tel composant, on utilise la notion d'indice de réduction sonore NR qui prend en compte les deux notions d'isolation et d'absorption. Cet indice peut être calculé par l'équation suivante :

$$NR(dB) = TL - 10\log(S/A),$$

où TL est l'indice d'affaiblissement acoustique (ci-après indice d'affaiblissement) traduisant l'isolation. Plus cet indice est élevé, meilleure est l'isolation. A est la surface d'absorption équivalente. Plus A est élevé, meilleure est l'absorption. S est la surface de la pièce.

Un composant d'insonorisation connu comprend une couche de masse lourde et une couche de mousse souple, assemblée sur la couche de masse lourde. Il forme ainsi un composant de type masse-ressort.

Pour fabriquer le composant, la couche de masse lourde est tout d'abord thermoformée à la forme finale du tablier. De nombreux passages d'organes sont généralement prévus à travers la couche de masse lourde. Des ouvertures correspondantes y sont donc ménagées, notamment pour faire passer la colonne de direction.

Lors du thermoformage, la masse lourde est fortement étirée dans la zone de l'ouverture correspondant au passage de la colonne de direction, ce qui peut causer plusieurs problèmes.

En premier lieu, une perte de performance acoustique résultant de la faible épaisseur locale de masse lourde est souvent observée. La masse lourde peut également percer et engendrer des rebuts. Enfin, cette zone critique peut être déformée lors du stockage.

Pour pallier ces problèmes, il est connu d'utiliser une pièce complémentaire de masse lourde, comme décrit dans FR3052696.

Cette solution améliore généralement le comportement acoustique et la robustesse de la pièce. Elle n'est cependant pas totalement satisfaisante.

Dans certains cas, de l'air est emprisonné entre la pièce complémentaire de masse lourde et la couche de masse lourde de base, ce qui crée des bulles pendant la chauffe. La chauffe n'est par ailleurs pas toujours homogène, les deux masses lourdes n'étant pas entièrement collées. Enfin, la pièce complémentaire doit être mise en place sur la chauffe à l'aide d'un préhenseur, ce qui occasionne une perte de temps.

Un but de l'invention est de fournir une pièce d'insonorisation comportant une couche de masse lourde présentant des ouvertures, notamment pour passer une colonne de direction, la pièce d'insonorisation présentant de bonnes propriétés acoustiques au voisinage de l'ouverture, tout en étant fiable et simple à fabriquer et à stocker.

A cet effet, l'invention a pour un objet une pièce de type précité, caractérisée en ce que l'insert est formé d'un matériau fibreux.

La pièce selon l'invention peut comprendre l'une ou plusieurs des caractéristiques suivantes, prise(s) isolément ou suivant toute combinaison techniquement possible :

- l'insert est fixé à la première face de la couche de masse lourde sans adhésif ;
- la couche de masse lourde définit une ouverture traversante de passage d'un organe du véhicule, l'insert étant disposé à la périphérie de l'ouverture traversante ;
- la couche de mousse recouvre l'insert en regard de la première région ;

- elle comporte une interface rigidifiée de renfort entre la couche de mousse et l'insert, l'interface rigidifiée étant formée de mousse de la couche de mousse ayant pénétré partiellement dans le matériau fibreux de l'insert ;
- l'insert présente une étendue inférieure à l'étendue totale de la couche de masse lourde et à l'étendue totale de la couche de mousse ;
- l'aire occupée par l'insert sur la première région de la première face de la couche de masse lourde est inférieure à 30 % de l'aire de la première face de la couche de masse lourde ;
- le matériau fibreux est un non tissé ;
- la masse surfacique de l'insert est inférieure à 1000 g/m², notamment comprise entre 300 g/m² et 700 g/m².

L'invention a aussi pour un objet un procédé de fabrication d'une pièce d'insonorisation de véhicule automobile, comprenant les étapes suivantes :

- fourniture d'une couche de masse lourde et d'un insert;
- disposition d'un insert sur une paroi d'un moule de thermoformage ;
- application d'une première région d'une première face de la couche de masse lourde sur l'insert et d'une deuxième région de la première face de la couche de mousse sur la paroi du moule de thermoformage autour de l'insert pour thermoformer la couche de masse lourde à la forme de la paroi du moule de thermoformage; puis
- formation d'une couche de mousse au moins sur la deuxième région de la première face de la couche de masse lourde ; caractérisé en ce que l'insert est formé d'un matériau fibreux.

Le procédé selon l'invention peut comprendre l'une ou plusieurs des caractéristiques suivantes, prise(s) isolément ou suivant toute combinaison techniquement possible :

- il comprend une étape d'aspiration de la couche de masse lourde contre la paroi du moule de thermoformage ;
- après thermoformage, l'insert épouse la forme de la couche de masse lourde ;
- la couche de masse lourde conserve son épaisseur dans la première région en regard de l'insert lors du thermoformage ;
- l'insert est lié à la couche de masse lourde sans adhésif ;
- l'insert est introduit dans le moule de thermoformage sans préchauffage ;
- la couche de mousse est formée par moussage en regard de l'insert pour recouvrir l'insert en regard de la deuxième région, la formation de la couche de mousse comportant la création d'une interface rigidifiée de renfort par pénétration partielle de mousse de la couche de mousse dans le matériau fibreux de l'insert.

L'invention sera mieux comprise à la lecture de la description qui va suivre, donnée uniquement à titre d'exemple, et faite en se référant aux dessins annexés, sur lesquels :

[Fig 1] la figure 1 est une vue en coupe des parties pertinentes d'une pièce d'insonorisation selon l'invention ;

[Fig 2] la figure 2 est une vue en coupe suivant un plan transversal d'un moule de thermoformage, pour la mise en œuvre du procédé selon l'invention, lors de l'étape d'insertion de l'insert et de la couche de masse lourde dans le moule de thermoformage ;

[Fig 3] la figure 3 est une vue analogue à la figure 2, illustrant l'étape d'aspiration de la couche de masse lourde et de l'insert contre la paroi du moule de thermoformage ;

[Fig 4] la figure 4 est une vue analogue à la figure 2, illustrant l'étape de moussage dans un moule de moussage.

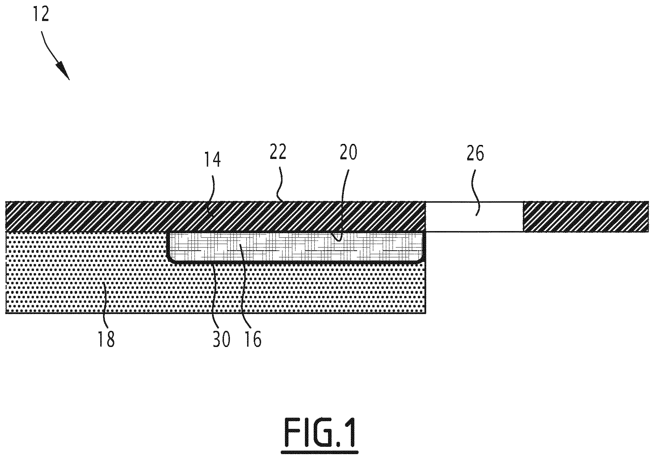

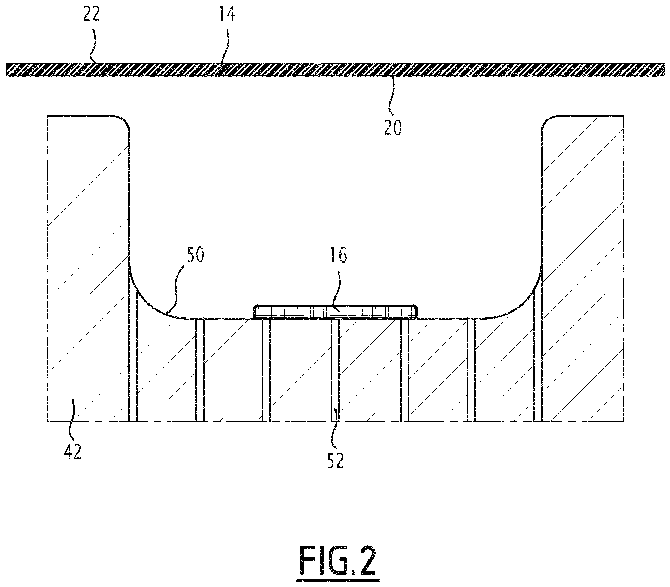

Une première pièce 12 d'insonorisation acoustique selon l'invention est représentée partiellement sur la figure 1. La pièce 12 est fabriquée par un procédé selon l'invention, mis en œuvre à l'aide d'un nécessaire illustré par les figures 2 à 4.

La pièce 12 est destinée à être montée à l'intérieur d'un véhicule automobile, notamment pour former un composant d'insonorisation. Le composant est avantageusement un tablier insonorisant destiné à être interposé entre l'habitacle du véhicule et le compartiment moteur.

En variante, la pièce d'insonorisation 12 est destinée à être posée sur le plancher du véhicule automobile, ou dans un passage de roues, ou plus généralement, à être appliquée sur une paroi du véhicule automobile pour réaliser une insonorisation.

Comme illustré sur la figure 1, la pièce 12 comporte une couche de masse lourde 14, un insert de renfort 16 en matériau fibreux et une couche de mousse 18, l'insert 16 étant placé entre la couche de masse lourde 14 et la couche de mousse 18.

La couche de masse lourde 14 présente une première face 20, et une deuxième face 22, et présente un contour extérieur délimitant avantageusement le pourtour de la pièce 12.

La couche de masse lourde 14 présente une épaisseur inférieure à ses autres dimensions. L'épaisseur de la couche 14 est généralement comprise entre 0,1 mm et 10 mm.

La couche de masse lourde 14 est avantageusement formée d'un bloc de matériau solide et est en particulier autoportante, présentant ainsi une tenue autonome, à l'inverse d'un matériau liquide ou fluide.

La couche de masse lourde 14 est formée par exemple d'un matériau thermoplastique de type polyoléfine, tel qu'un copolymère d'éthylène et d'acétate de vinyle, un polyéthylène, un polymère éthylène propylène diène monomère.

Elle incorpore avantageusement des charges, de type bitume, craie et/ou sulfate de baryum permettant d'obtenir une densité élevée, par exemple supérieure à 1500 kg/m$^3$, de préférence supérieure ou égale à 2000 kg/m$^3$.

La masse surfacique de la couche de masse lourde 14 est comprise notamment entre 0,2 kg/m$^2$ et 9 kg/m$^2$, en particulier entre 1 kg/m$^2$ et 4 kg/m$^2$.

La couche de masse lourde 14 définit au moins une ouverture traversante 26, destinée au passage d'un organe du véhicule. L'ouverture 26 traverse l'épaisseur de la couche de masse lourde 14 et débouche dans la première face 20 et dans la deuxième face 22. Elle présente dans cet exemple un contour fermé.

Sur la figure 1, une seule ouverture traversante 26 est illustrée. Avantageusement, la couche de masse lourde 14 définit plusieurs ouvertures traversantes 26.

Dans cet exemple, l'ouverture traversante 26 est destinée au passage d'une colonne de direction à travers la pièce 12.

L'insert 16 est ici disposé à la périphérie de l'ouverture traversante 26.

Il est appliqué sur une première région de la première face 20 de la couche de masse lourde 14.

L'insert 16 est formé d'un matériau fibreux. Dans cet exemple, le matériau fibreux est non tissé.

Un non tissé est une nappe de fibres réparties directionnellement ou par hasard, dont la cohésion interne est assurée par des méthodes mécaniques et/ou physiques, et/ou chimiques et/ou par combinaison de ces divers procédés, à l'exclusion du tissage et du tricotage.

Le non tissé est par exemple réalisé à partir de fibres nobles et/ou recyclées, naturelles ou synthétiques, d'une seule ou de plusieurs natures. Des exemples de fibres naturelles pouvant être utilisées sont le lin, le coton, le chanvre, le bambou, etc. Des exemples de fibres synthétiques pouvant être utilisées sont les fibres minérales telles que des fibres de verre, ou des fibres organiques telles que le kevlar®, le polyamide, l'acrylique, le polyester, le polypropylène.

Comme illustré sur la figure 2, l'insert 16 est déformable pour épouser la forme que présente la couche de masse lourde 14 une fois la pièce 12 fabriquée.

L'insert 16 présente une étendue, prise suivant son contour extérieur, inférieure à l'étendue totale de la couche de masse lourde 14 et à l'étendue totale de la couche de mousse 18, prises suivant leur contour extérieur.

Avantageusement, l'insert 16 présente une étendue maximale inférieure à 30% de l'étendue de chacune des faces 20, 22 de la couche de masse lourde 14.

La masse surfacique de l'insert 16 est inférieure à 1000 g/m$^2$, notamment comprise entre 300 g/m$^2$ et 700 g/m$^2$.

L'insert 16 présente par exemple une épaisseur comprise entre 50% et 200% de l'épaisseur de la couche de masse lourde 14, dans la région sur laquelle il est appliqué.

L'insert 16 présente une résistivité au passage de l'air non nulle. La résistivité de l'insert est par exemple inférieure à 100000 N.m$^{-4}$.s et notamment comprise entre 10000 N.m$^{-4}$.s et 50000 N.m$^{-4}$.s.

La résistance au passage de l'air ou sa résistivité est mesurée par la méthode décrite dans la thèse "Mesures des paramètres caractérisant un milieu poreux. Etude expérimentale du comportement acoustique des mousses aux basses fréquences.", Michel HENRY, soutenue le 3 octobre 1997 à l'Université du Mans.

L'insert 16 est appliqué totalement sur la couche de masse lourde 14, sans adhésif et sans interstice entre eux.

Il s'étend avantageusement sur le pourtour d'une ouverture traversante 26, pour assurer un renfort de la couche de masse lourde 14 à la périphérie de l'ouverture traversante 26.

L'insert 16 est également appliqué contre la couche de mousse 18, de sorte qu'il soit couvert par la couche de mousse 18.

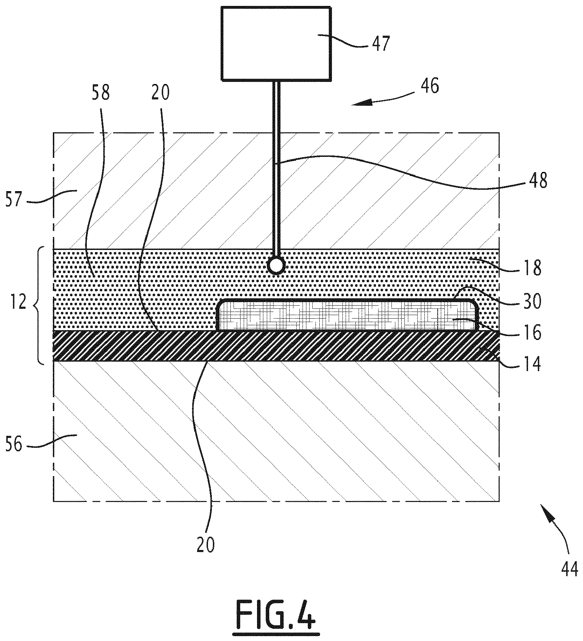

De préférence, l'insert 16 et la couche de mousse 18 présentent une interface rigidifiée 30 de renfort formée de mousse de la couche de mousse 18 ayant pénétré partiellement dans le matériau fibreux de l'insert 16, visible sur les figures 1 et 4. La surdensité ainsi formée au niveau de l'interface 30 augmente la rigidité de la zone.

La densité de l'interface rigidifiée 30 est supérieure à la densité de la couche de mousse 18 et à celle de l'insert 16.

L'épaisseur de l'interface rigidifiée est comprise entre 10% et 100% de l'épaisseur de l'insert 16.

L'interface rigidifiée 30 présente une résistance au passage de l'air supérieure à celle de l'insert 16, par exemple supérieure à 4000 N.m$^{-3}$.s.

La couche de mousse 18 est par exemple une mousse à cellules ouvertes, notamment réalisée en polyuréthane.

Comme indiqué plus haut, la couche de mousse 18 couvre l'insert 16 en regard de la première région de la première face 20. Elle s'applique directement sur une deuxième région de la première face 20, au moins à la périphérie de l'insert 16.

L'épaisseur maximale de la couche de mousse 18 est supérieure à celle de la couche de masse lourde 14. Cette épaisseur peut cependant être variable en se déplaçant le long de la couche de masse lourde 14.

L'épaisseur de la couche de mousse 18 est par exemple comprise entre 4 mm et 12 mm, par exemple égale à 8 mm.

La densité de la couche de mousse 18 est comprise avantageusement entre 10 kg/m$^3$ et 80 kg/m$^3$, en

étant par exemple environ égale à 70 kg/m³.

La résistance au passage de l'air de la couche de mousse 18 est par exemple comprise entre 200 N.m⁻³.s et 3500 N.m⁻³.s, par exemple égale à 2000 N.m⁻³.s.

Pour présenter des propriétés de ressort, la couche de mousse 18 présente avantageusement un module élastique supérieur à 5000 Pa. Ce module est avantageusement compris entre 20000 Pa et 100000 Pa, notamment entre 30000 Pa et 40000 Pa.

Le module élastique est mesuré suivant la Norme mesuré par exemple par la méthode décrite dans l'article : C Langlois, R Panneton, and N Atalla, «Polynomial for quasistatic mechanical characterization of isotropic materials, «J. Acoust. Soc. Am. 110, 3032-3040 (2001).

La pièce 12 d'insonorisation de véhicule automobile est produite par le procédé selon l'invention à l'aide d'un nécessaire comprenant un premier moule de thermoformage 42, ainsi qu'un second moule de moussage 44.

Avantageusement, le nécessaire comprend également un outillage, non représenté ici, destiné à mettre œuvre le découpage de la couche de masse lourde 14 et de l'insert 16.

Le poste de chauffe est destiné à réaliser le chauffage de la couche de masse lourde 14 et n'est pas représenté ici.

Le moule de thermoformage 42 est destiné à donner sa forme à la pièce 12, tout en assemblant l'insert 16 sur la couche de masse lourde 14.

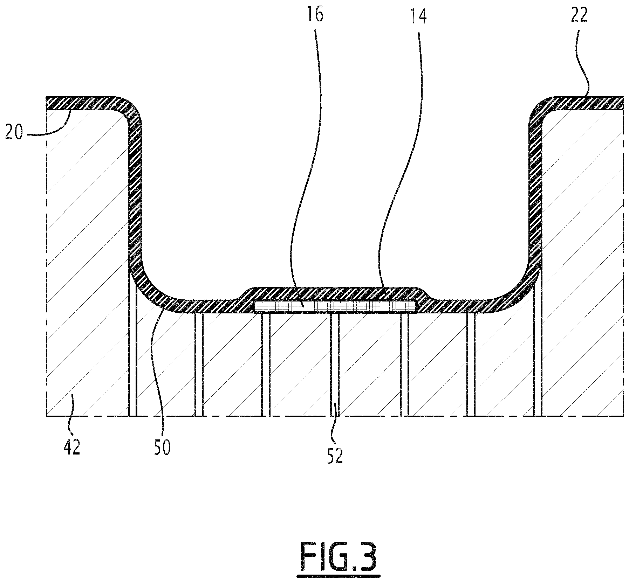

Comme illustré sur les figures 2 et 3, le moule de thermoformage 42 comporte une paroi d'appui 50. Le moule de thermoformage 42 comporte aussi un dispositif de mise sous vide destiné à aspirer un élément au contact de la paroi 50, au travers d'une pluralité d'orifices 52 délimités par la paroi d'appui 50.

Comme illustré sur les figures 2 et 3, la paroi d'appui 50 est de forme complémentaire à la forme de la pièce 12.

La première paroi 50 présente avantageusement des reliefs destinés à donner sa forme à la pièce 12 pour produire par exemple des creux et des bosses sur la pièce 12.

Le moule de moussage 44 est destiné à former la couche de mousse 18 de la pièce 12.

Le moule de moussage 44 comporte un demi-moule inférieur 56 et un demi-moule supérieur 57, définissant une cavité de moulage 58, ainsi qu'un ensemble d'injection 46 représentés sur la figure 4.

La couche de masse lourde 14 et l'insert 16 assemblé sur celle-ci, sont destinés à être disposés contre le demi-moule inférieur 56, la deuxième face 22 de la couche de masse lourde 14 étant appliquée sur le demi moule inférieur 56. La première face 20 de la couche de masse lourde 14 portant l'insert 16 est destinée à être placée en regard du demi-moule supérieur 57, à l'écart de celui-ci.

La cavité de moulage 58, est de forme conjuguée à celle de la couche de mousse 18. Elle s'étend entre le demi moule supérieur 57 et la couche de masse lourde 14 portant l'insert 16.

L'ensemble d'injection 46 comporte un réservoir 47 contenant un matériau moussant, et un conduit 48 d'amenée du matériau moussant débouchant dans la cavité de moulage 58.

L'outillage comprend par exemple d'un ensemble de découpe, notamment apte à découper l'insert 16 pour lui donner les dimensions voulues.

Il comprend un ensemble de perforation de la couche de masse lourde 14 et de la couche de mousse 18 propre à former les ouvertures traversantes 26.

Un procédé de fabrication d'une pièce 12 d'insonorisation de véhicule automobile va maintenant être décrit.

Le procédé comprend initialement la fourniture d'une couche de masse lourde 14 et d'un insert 16 au voisinage du moule de thermoformage 42.

L'insert 16 est tout d'abord inséré dans le moule de thermoformage 42 en étant disposé à plat et sans préchauffage, sur la paroi d'appui 50 du moule de thermoformage 42.

Puis, la couche de masse lourde 14 est chauffée dans le poste de chauffe jusqu'à une température avantageusement supérieure à sa température de ramollissement. Elle est par exemple chauffée à une température comprise entre 160°C et 200°C.

Par « température de ramollissement », on entend la température de ramollissement définie par la norme ISO 4625-1:2004. Pour une masse lourde, cette température est légèrement inférieure à la température de fusion du polymère qu'elle contient, par exemple inférieure d'au moins 10°C à la température de fusion du polymère.

Le procédé comporte alors l'insertion de la couche de masse lourde 14 dans le moule de thermoformage 42, comme illustré sur la figure 2.

La couche de masse lourde 14 est alors disposée sur la paroi d'appui 50 en couvrant l'insert 16. Sa première face 20 s'applique sur l'insert 16 dans une première région et s'applique directement sur la paroi d'appui 50 dans une deuxième région à l'écart de l'insert 16.

Puis, le dispositif de mise sous vide est activé. L'insert 16 et la couche de masse lourde 14 sont aspirés vers la paroi d'appui 50 par l'intermédiaire des orifices 52 de la paroi d'appui 50.

Sous l'effet de la chaleur présente dans la couche de masse lourde 14 et de l'aspiration, l'insert 16 se colle contre la couche de masse lourde 14 en adoptant la forme de la paroi d'appui 50 en regard.

Grâce à la présence de l'insert 16, la couche de masse lourde 14 conserve son épaisseur dans la première région en regard de l'insert 16 lors du thermoformage.

A la fin de cette étape, l'insert 16 est appliqué totalement sur la couche de masse lourde 14. L'insert 16 adhère à la couche de masse lourde 14. L'insert 16 et la couche de masse lourde 14 épousent la forme de la paroi d'appui 50 du moule de thermoformage 42.

Le moule de thermoformage 42 est alors ouvert, et l'ensemble formé par l'insert 16 et la couche de masse lourde 14 est extrait du moule de thermoformage 42.

Puis, l'ensemble formé par l'insert 16 et la couche de masse lourde 14 est placé dans le moule de moussage 44, de sorte que la deuxième face 22 de la couche de masse lourde soit au contact de la paroi du demi-moule inférieur 56, en bas sur la figure 4, l'insert 16 étant dirigé vers le demi moule supérieur 57, vers le haut, comme illustré sur la figure 4.

Le moule de moussage 44 est fermé et le matériau moussant fluide destiné à former la couche de mousse 18 est introduit dans la cavité de moulage 58 par l'ensemble d'injection 46.

La formation de la couche de mousse 18 provoque la compression de l'ensemble formé par la couche de masse lourde 14 et l'insert 16 contre le premier demi moule 56 du moule de moussage 44.

Par ailleurs, le moussage conduit à la création d'une interface rigidifiée 30 de renfort entre l'insert 16 et la couche de mousse 18, résultant de la pénétration partielle de mousse de la couche de mousse 18 dans le matériau fibreux de l'insert 16.

La surdensité ainsi formée entre l'insert 16 et la couche de mousse 18 augmente la rigidité de la zone.

Une fois la couche de mousse 18 formée, le moule de moussage 44 est ouvert. La pièce 12 constituée de la couche de masse lourde 14, de l'insert 16, et de la couche de mousse 18 est extraite du moule 44.

La pièce 12 est alors introduite dans l'ensemble de perforation pour former les ouvertures traversantes 26.

Ce procédé de fabrication garantit une excellente précision de fabrication de la pièce d'insonorisation de véhicule automobile 12.

Un tel procédé permet de compenser les faibles épaisseurs de certaines zones au voisinage de la colonne de direction du véhicule automobile, ces faiblesses étant par exemple dues à l'étirement de la couche de masse lourde 14 lors de la mise en forme. En ajoutant un insert 16 fibreux, cet insert se forme sans s'allonger et bloque localement la couche de masse lourde 14. De cette manière, l'épaisseur de la couche de masse lourde 14 reste sensiblement constante en regard de l'insert 16, ce qui évite de détériorer l'acoustique ou/et la tenue mécanique de la pièce 12.

Cette amélioration de procédé diminue par ailleurs les déformations liées à la manipulation des pièces lors du stockage.

Dans une variante, une couche de mousse additionnelle (non représentée) est formée sur la deuxième face 22 de la couche de masse lourde 16, à la fin du thermoformage, avantageusement dans le moule de thermoformage 42.

## Revendications

1. Pièce (12) d'insonorisation de véhicule automobile, comprenant :

   - une couche de masse lourde (14) ;
   - un insert (16) appliqué sur une première région d'une première face (20) de la couche de masse lourde (14) ;
   - une couche de mousse (18) appliquée sur une deuxième région de la première face (20) de la couche de masse lourde (14) ;

   **caractérisée en ce que** l'insert (16) est formé d'un matériau fibreux.

2. Pièce (12) selon la revendication 1, dans laquelle l'insert (16) est fixé à la première face (20) de la couche de masse lourde (14) sans adhésif.

3. Pièce (12) selon la revendication 1 ou 2, dans laquelle la couche de masse lourde (14) définit une ouverture traversante (26) de passage d'un organe du véhicule, l'insert (16) étant disposé à la périphérie de l'ouverture traversante (26).

4. Pièce (12) selon l'une quelconque des revendications précédentes, dans laquelle la couche de mousse (18) recouvre l'insert (16) en regard de la première région.

5. Pièce (12) selon la revendication 4, comprenant une interface rigidifiée (30) de renfort entre la couche de mousse (18) et l'insert (16), l'interface rigidifiée (30) étant formée de mousse de la couche de mousse (18) ayant pénétré partiellement dans le matériau fibreux de l'insert (16).

6. Pièce (12) selon l'une quelconque des revendications précédentes, dans laquelle l'insert (16) présente une étendue inférieure à l'étendue totale de la couche de masse lourde (14) et à l'étendue totale de la couche de mousse (18).

7. Pièce (12) selon l'une quelconque des revendications précédentes, dans laquelle l'aire occupée par l'insert (16) sur la première région de la première face (20) de la couche de masse lourde (14) est inférieure à 30 % de l'aire de la première face (20) de la couche de masse lourde (14).

8. Pièce (12) selon l'une quelconque des revendications précédentes, dans laquelle le matériau fibreux est un non tissé.

9. Pièce (12) selon l'une quelconque des revendications précédentes, dans laquelle la masse surfacique de l'insert (16) est inférieure à 1000 g/m², notamment comprise entre 300 g/m$^2$ et 700 g/m$^2$.

10. Procédé de fabrication d'une pièce (12) d'insonorisation de véhicule automobile, comprenant les étapes suivantes :

   - fourniture d'une couche de masse lourde (14) et d'un insert (16);
   - disposition d'un insert (16) sur une paroi (50) d'un moule de thermoformage (42) ;
   - application d'une première région d'une première face (20) de la couche de masse lourde (14) sur l'insert (16) et d'une deuxième région de la première face (20) de la couche de mousse (18) sur la paroi (50) du moule de thermoformage (42) autour de l'insert (16) pour thermoformer la couche de masse lourde (14) à la forme de la paroi (50) du moule de thermoformage (42); puis
   - formation d'une couche de mousse (18) au moins sur la deuxième région de la première face (20) de la couche de masse lourde (14) ;

   **caractérisé en ce que** l'insert (16) est formé d'un matériau fibreux.

11. Procédé selon la revendication 10, comportant une étape d'aspiration de la couche de masse lourde (14) contre la paroi (50) du moule de thermoformage (42).

12. Procédé selon la revendication 10 ou 11, dans lequel, après thermoformage, l'insert (16) épouse la forme de la couche de masse lourde (14).

13. Procédé selon l'une quelconque des revendications 10 à 12, dans lequel la couche de masse lourde (14) conserve son épaisseur dans la première région en regard de l'insert (16) lors du thermoformage.

14. Procédé selon l'une quelconque des revendications 10 à 13, dans lequel l'insert (16) est lié à la couche de masse lourde (14) sans adhésif.

15. Procédé selon l'une quelconque des revendications 10 à 14, dans lequel l'insert (16) est introduit dans le moule de thermoformage (42) sans préchauffage.

16. Procédé selon l'une quelconque des revendications 10 à 15, dans lequel la couche de mousse (18) est formée par moussage en regard de l'insert (16) pour recouvrir l'insert (16) en regard de la deuxième région, la formation de la couche de mousse (18) comportant la création d'une interface rigidifiée (30) de renfort par pénétration partielle de mousse de la couche de mousse (18) dans le matériau fibreux de l'insert (16).

FIG.1

FIG.2

## FIG.3

**FIG.4**

**Europäisches Patentamt**
**European Patent Office**
**Office européen des brevets**

# RAPPORT DE RECHERCHE EUROPEENNE

Numéro de la demande

EP 21 19 9398

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 3 088 235 A1 (FAURECIA AUTOMOTIVE IND [FR]) 15 mai 2020 (2020-05-15) * Rev. 1 gif. 1-4 * ----- | 1-14 | INV. B60R13/08 B29C51/10 B29C51/12 B29C51/14 |
| A | US 6 576 172 B1 (ARIO TOSHIYUKI [JP] ET AL) 10 juin 2003 (2003-06-10) * Sound proof product process * ----- | 1-15 | B29C44/12 B29C44/14 B32B5/02 B32B5/24 |

**DOMAINES TECHNIQUES RECHERCHES (IPC)**

B60R
B29C
B32B
B29K
B29L

Le présent rapport a été établi pour toutes les revendications

| Lieu de la recherche | Date d'achèvement de la recherche | Examinateur |
|---|---|---|
| Munich | 3 février 2022 | Tonelli, Enrico |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 21 19 9398

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-02-2022

| Document brevet cité au rapport de recherche | Date de publication | Membre(s) de la famille de brevet(s) | Date de publication |
|---|---|---|---|
| FR 3088235 A1 | 15-05-2020 | AUCUN | |
| US 6576172 B1 | 10-06-2003 | EP 1078724 A2 | 28-02-2001 |
| | | US 6576172 B1 | 10-06-2003 |

EPO FORM P0460

Pour tout renseignement concernant cette annexe : voir Journal Officiel de l'Office européen des brevets, No.12/82

EP 3 974 260 A1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3052696

**Littérature non-brevet citée dans la description**

- **MICHEL HENRY.** Mesures des paramètres caractérisant un milieu poreux. Etude expérimentale du comportement acoustique des mousses aux basses fréquences. Université du Mans, 03 Octobre 1997

- **C LANGLOIS ; R PANNETON ; N ATALLA.** Polynomial for quasistatic mechanical characterization of isotropic materials. *J. Acoust. Soc. Am.,* 2001, vol. 110, 3032-3040